# EUROPÄISCHE PATENTSCHRIFT

(11) **EP 0 604 503 B1**
(45) Veröffentlichungstag und Bekanntmachung des Hinweises auf die Patenterteilung: **03.05.1995**
(21) Anmeldenummer: 92919494.2
(22) Anmeldetag: 16.09.1992
(51) Int. Cl.: H02K 11/00, H02K 9/06

(54) **KÜHLSYSTEM FÜR ELEKTRISCHE MASCHINEN**
COOLING SYSTEM FOR ELECTRIC MOTORS
SYSTEME DE REFROIDISSEMENT POUR MOTEURS ELECTRIQUES

(30) Priorität: 20.09.1991 AU 8480/91
(43) Veröffentlichungstag der Anmeldung: 06.07.1994
(73) Patentinhaber: ROBERT BOSCH GMBH, 70442 Stuttgart (DE)
(72) Erfinder: PANG, Peter, Ta-Yuen, Mount Waverley, VIC 3149 (AU); TAN, Budi, Endeavour Hills, VIC 3802 (AU)
(86) Internationale Anmeldenummer: DE9200783
(87) Internationale Veröffentlichungsnummer: WO9306648

(56) Entgegenhaltungen:
- EP-A- 0 125 834
- DE-A- 3 500 723
- PATENT ABSTRACTS OF JAPAN, Bd. 10, Nr. 332 (E-453)(2388), 12. November 1986; & JP-A-61 139 246

## Beschreibung

Diese Erfindung betrifft eine elektrische Maschine, gemäß dem Oberbegriff des Anspruchs 1.

Elektrische Maschinen enthalten oftmals Halbleiter-Komponenten wie Gleichrichter im Gehäuse der Maschine. Dies erlaubt eine kompakte und robuste Gestaltung. Dazu ist es normalerweise erforderlich, die Halbleiterkomponenten so zu kühlen, daß sie ihre normale Arbeitstemperaturen nicht überschreiten. Wo Kühlung erforderlich ist, sind üblicherweise Lüfter zur Erzeugung eines Kühlluftstroms über den Schaltungselementen vorgesehen. Die Lüfter können außen am Gehäuse sein, wobei ein relativ großer Luftstrom erzeugt wird, und wobei sich, allgemein gesprochen, keine besonderen Probleme ergeben, die Betriebstemperatur der Schaltungselemente unter dem erlaubten Maximum zu halten. Die Anordnung ist jedoch etwas sperrig und kann Luftgeräusche erzeugen. In einigen Ausführungen entspricht der Geräuschpegel eines Wechselstromgenerators mit externem Lüfter nicht mehr den Anforderungen. In anderen Ausführungen, wo ein oder mehrere Lüfter im Gehäuse angeordnet sind, haben die Lüfterschaufeln nur eine begrenzte Größe und daher ist die Menge der Kühlluft geringer. Mit den internen Lüftern ist es schwieriger, eine ausreichende Luftmenge des Kühlluftstromes zu erhalten, um die Schaltungselemente vor einem Ansteigen der Temperatur über ihre normalen Betriebstemperaturen, insbesondere bei höheren Umgebungstemperaturen zu bewahren.

Aus der EP-A 0 125 834 ist eine solche gattungsgemäße elektrische Maschine als Drehstromgenerator zur Versorgung des Bordnetzes von Kraftfahrzeugen bekannt, bei dem ein wesentlicher Teil des gesamten Kühlluftstromes von der Stirnseite her durch die inneren Gehäuseöffnungen eintritt und ohne die Gleichrichterelemente zu berühren, unmittelbar durch eine zentrale Öffnung der Kühlkörper und hindurch zum Lüfter gelangt. Der weitaus größere Teil dieses Kühlmittelluftstromes wird sodann unmittelbar von den Lüfterflügeln aufgenommen und über den Wickelkopf der Generatorwickung zu dessen Kühlung hinweggeführt. Ein relativ schwacher Luftstrom gelangt dabei entlang der Rückseite des Gleichrichter-Kühlkörpers ins Freie. Die Kühlung an den Halbleiterelementen der Gleichrichter-Baueinheit wird hierbei mit zunehmender Belastung sowie bei hohen Außentemperaturen unzureichend. Außerem fließt über den Luftspalt zwischen der Innenwandung des Generatorgehäuses und dem äußeren Rand des Gleichrichter-Kühlkörpers ein Kühlleckstrom. Aus der JP-A 61-139 246 ist darüber hinaus bekannt, einen solchen, die Kühlwirkung beeinträchtigenden Leckstrom durch einen Dichtungsring zu verhindern, welcher zwischen dem Generatorgehäuse und dem Außenrand einer Tragplatte einer Gleichrichter-Baueinheit eingesetzt ist.

Gegenstand der vorliegenden Erfindung ist es, derartige elektrische Maschinen durch besondere Maßnahmen zu verbessern, die dazu beitragen die Effiezenz der Kühlung von Schaltungselementen, die innerhalb des Gehäuses angeordnet sind, zu erhöhen.

Die Aufgabe wird durch die Erfindung gelöst. Diese ist im Anspruch 1 offenbart. Besondere Ausführungsarten der Erfindung sind in den abhängigen Ansprüchen 2-10 beschrieben. Diese können neben den wesentlichen Merkmalen gemäß dem Anspruch 1 die folgenden weiteren Einzelheiten aufweisen:

Vorzugsweise ist die äußere Peripherie des Tragkörpers kreisförmig. Ferner ist vorzugsweise die äußere Peripherie des Tragkörpers mit einer Dichtlippe versehen, welche den Tragkörper gegen die Innenwand des Gehäuses abdichtet.

Ferner enthält die Maschine Barrieren für eine wirksame Verhinderung eines axialen Luftstromes an der inneren Peripherie des Kühlkörpers, wobei die gesamte Kühlluft wirksam in hauptsächlich radialer Richtung angrenzend an einer Seite des Kühlkörpers entlang nach außen fließt.

Vorzugsweise enthält die Barriere eine Hülse. Ferner ist vorzugsweise die Hülse Teil einer elastischen Passbuchse, in welcher ein Lager des Rotors montiert ist.

Ferner ist der Kühlkörper mit Abstand hinter der Stirnwand montiert und die Stirnwand weist Öffnungen auf, die zum Einströmen von Luft in das Gehäuse dienen. Die Öffnungen sind allgemein im Bereich der an dem Kühlkörper montierten Schaltungselemente angeordnet, so daß die in das Gehäuse eintretenden Luftströme direkt auf die Schaltungselemente einwirken.

Diese Anordnung erhöht den Wärmetransport von den Schaltungselementen zu den kühlenden Luftströmen.

Ferner weist der Kühlkörper zum Gehäuse ein unterschiedliches elektrisches Potential auf und der Kühlkörper ist vom Gehäuse durch mindestens ein relativ dünnes Isolationselement elektrisch getrennt wobei die elektrisches Isolation bei ausgeprägter thermischer Leitfähigkeit die Wärmeableitung vom Kühlkörper zum Gehäuse gewährleistet.

Vorzugsweise umfaßt das Isolierelement eine Unterlegscheibe aus Glimmer.

Der Tragkörper ist so gestaltet, daß im Luftstrom Turbulenzen erzeugt werden.

Vorzugsweise werden die Turbulenzen an der äußeren Peripherie des Tragkörpers erzeugt. Vorzugsweise weist hierzu der Tragkörper in der Nähe der äußeren Peripherie einen Rezess auf, der zum Kühlkörper hin gerichtet ist und die Form einer umlaufenden Mulde hat.

Die Schaltungselemente weisen Anschlußleiter auf, welche durch Öffnungen im Tragkörper führen. Wesentlich dabei ist die relativ große Weite der Öffnungen, wobei die durch diese Öffnungen strömende Luft Hitze von den Leitern absorbiert.

Vorzugsweise haben die Öffnungen eine Fläche von mindestens 50 mm².

### Zeichnung

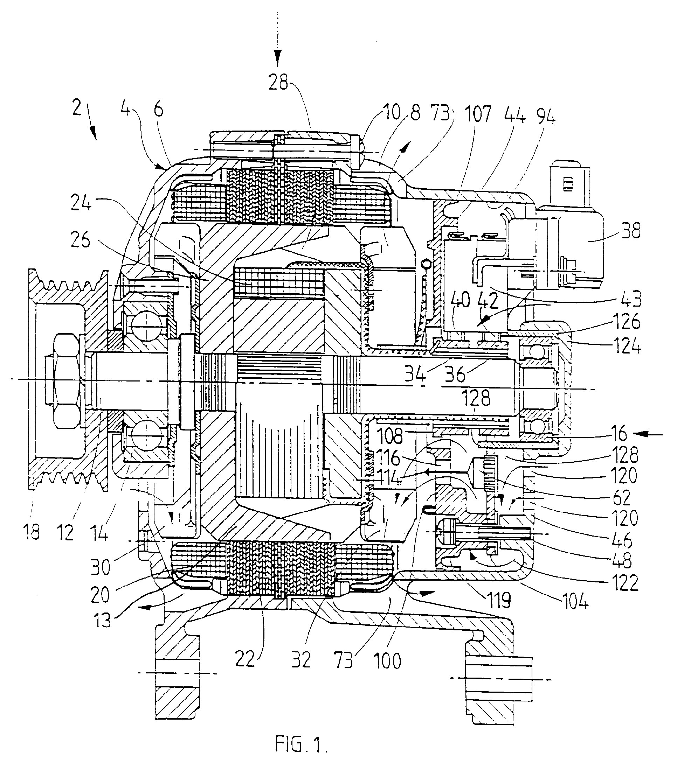

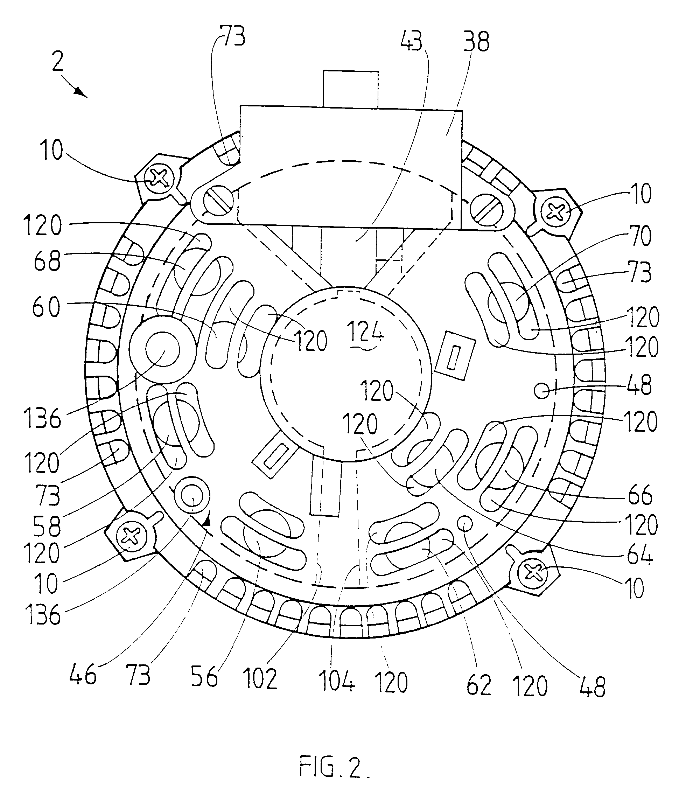

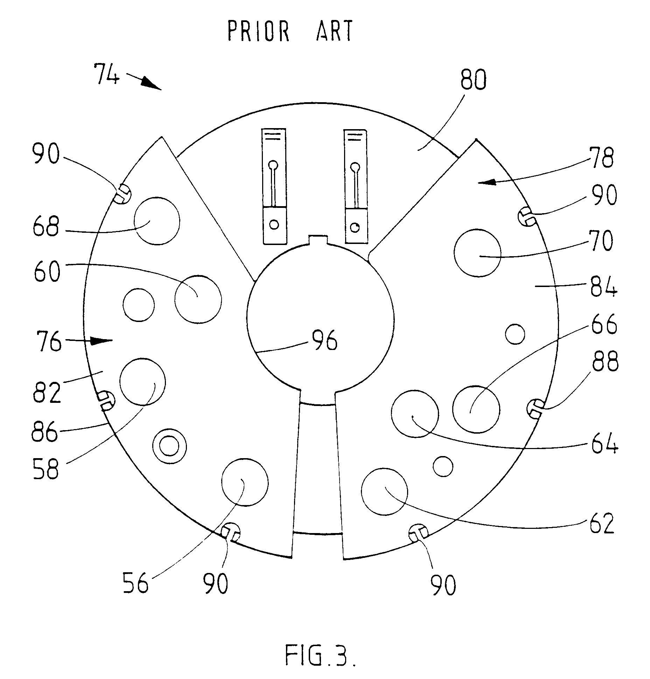

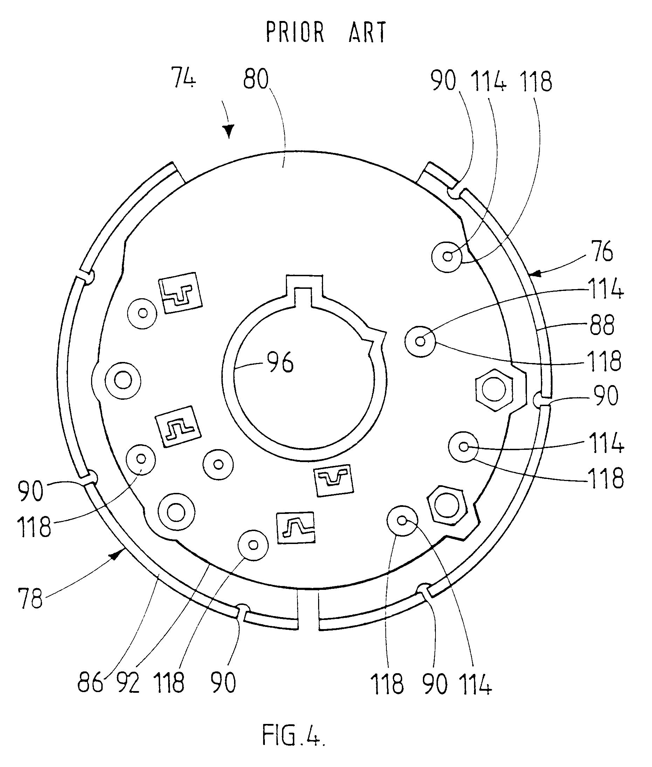

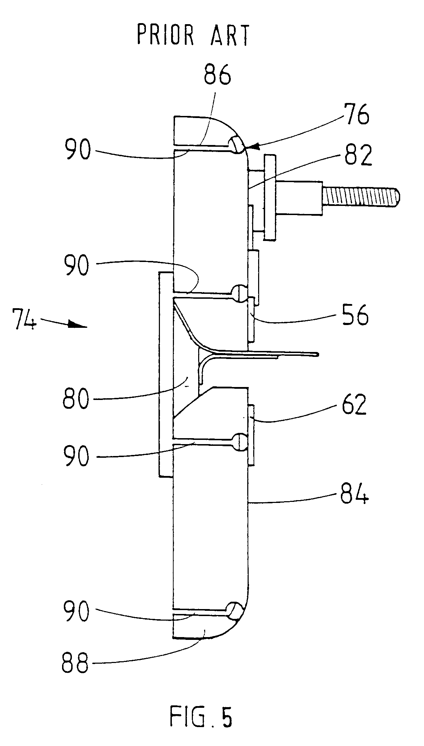

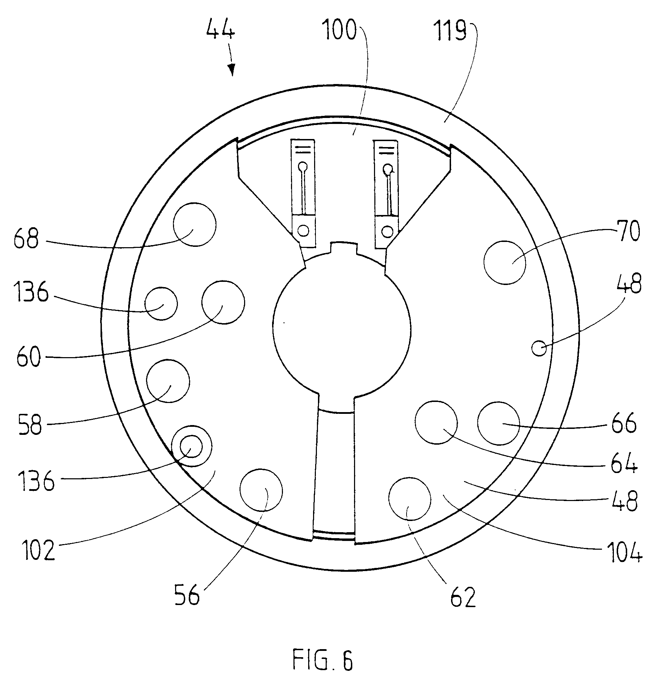

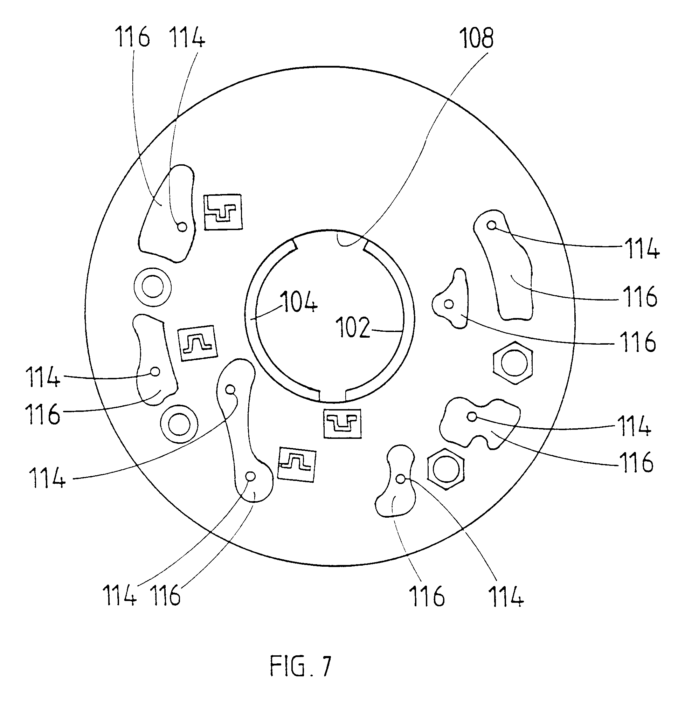

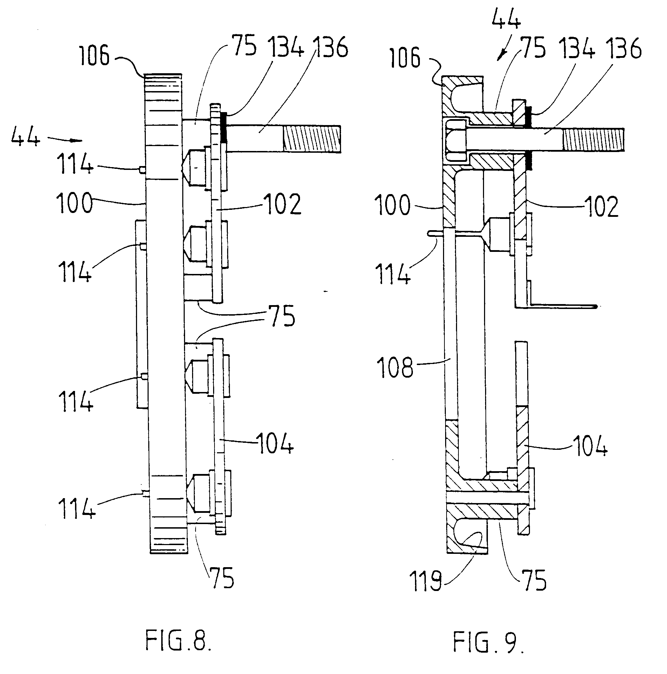

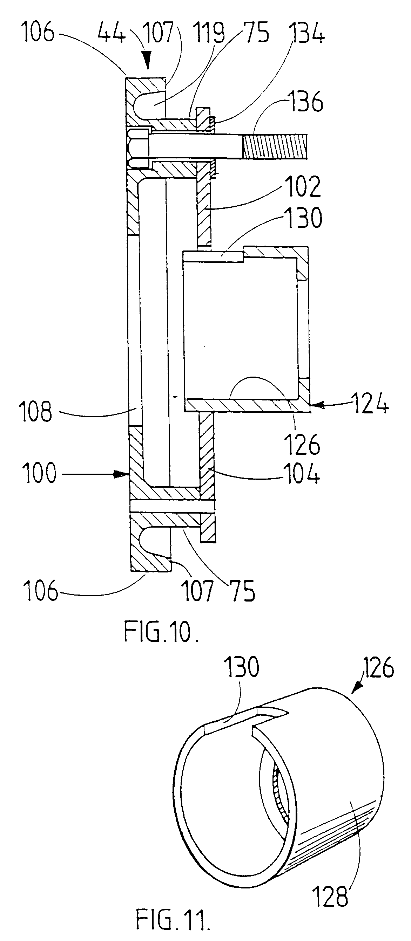

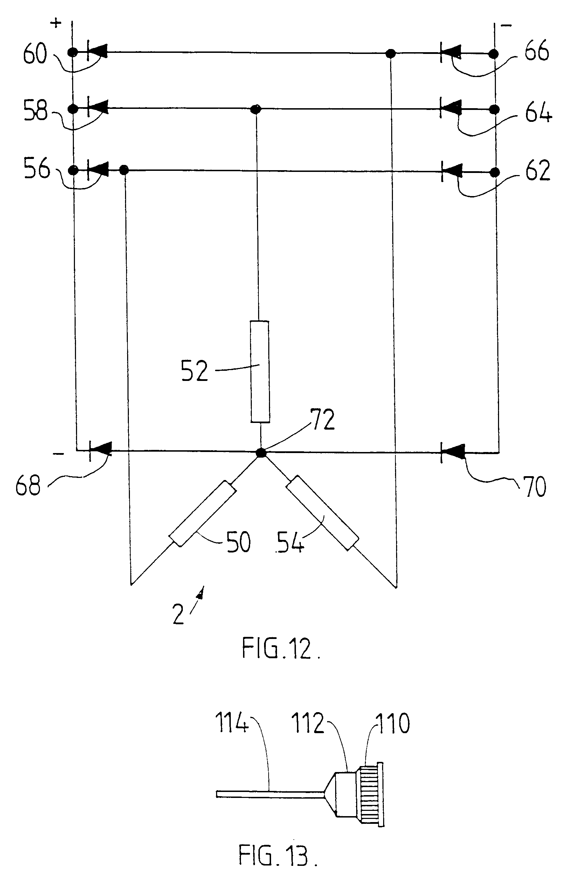

Die Erfindung wird nun in der nachfolgenden Beschreibung mit Bezug auf die beigefügten Zeichnungen näher erläutert. Es zeigen: Figur 1 einen Längsschnitt durch einen Drehstromgenerator nach der vorliegenden Erfindung, Figur 2 die Rückseite des Generatorgehäuses, Figur 3 die Rückseite einer bekannten Form eines Kühlkörpers und seines Tragkörpers, Figur 4 die entgegengesetzte Ansicht des Kühlkörpers und des Tragkörpers, Figur 5 eine Seitenansicht der bekannten Form einer Kühlkörper-Tragkörper-Einheit, Figur 6 die Rückseite von Kühlkörpern und Tragkörper gestaltet in Übereinstimmung mit der Erfindung, Figur 7 eine Ansicht von der anderen Seite dieser Baueinheit, Figur 8 eine Seitenansicht einer erfindungsgemäßen Kühlkörper-Tragkörper-Einheit, Figur 9 einen Querschnitt durch die erfindungsgemäße Baueinheit nach Figur 8, Figur 10 eine erfindungsgemäße Kühlkörper-Tragköper-Einheit in ihrer Arbeitsposition im Hinblick auf eine Lagerpassbuchse, Figur 11 eine perspektivische Ansicht der Lagerpassbuchse, Figur 12 eine Schaltung für einen typischen Kraftfahrzeug-Drehstromgenerator und Figur 13 eine typische Diode zur Verwendung in einem Drehstromgenerator.

### Beschreibung der Ausführungsbeispiele

Die Figuren 1,2 und 6 bis 11 stellen einen Dreiphasen-Wechselstrom- bzw. Drehstromgenerator 2 mit den erfindungsgemäßen Konstruktionsmerkmalen dar. Der Generator hat ein Gehäuse 4, das ein Vorderteil 6 und ein Hinterteil 8 umfaßt, welche durch Schrauben 10 zusammengehalten werden. Der Generator enthält ferner eine Welle 12, die einen Rotor 13 trägt und die durch ein vorderes Lager 14 und ein hinteres Lager 16 im Gehäuse 4 drehbar montiert ist. Eine Riemenscheibe 18 ist am vorderen Ende der Welle 12 montiert. Im Gehäuse 4 ist ferner eine Statorwicklung 20 und ein Startorkern 22 montiert.

Die Welle 12 trägt im Rotor 13 eine Erregerwicklung 24, die zwischen zwei Klauenpolhälften 26, 28 des Rotors 13 montiert ist. Ferner ist auf der Welle 12 zu beiden Stirnseiten des Rotors 13 ein vorderer und ein hinterer Lüfter 30 und 32 montiert. Ein Paar Schleifringe 34 und 36 sind angrenzend am hinteren Lüfter 32 zur Stromversorgung der Erregerwicklung 24 auf der Welle 12 befestigt. Der Strom in der Erregerwicklung 24 wird durch einen Regler 38 gesteuert, dessen Ausgang über Kohlebürsten 40 und 42, die mit den Schleifringen 34 und 36 zusammenwirken mit der Erregerwicklung 24 verbunden ist. Die Kohlebürsten 40 und 42 sind in einem Bürstenhalter 43 aufgenommen.

In typischer Weise ist die Statorwicklung 20 mit drei Ausgängen für einen Dreiphasen-Wechselstrom- bzw. Drehstrom versehen, der zur Verwendung in Kraftfahrzeugen gleichgerichtet wird, so daß die Ausgangsanschlüsse der Maschine mit einer Kraftfahrzeugbatterie zu verbinden sind. Die dargestellte Maschine enthält hierzu einen Dreiphasen-Gleichrichter, der zusammen mit Kühlkörpern 102, 104 und einen Tragkörper 100 eine Gleichrichter-Baueinheit 44 bildet. Die Baueinheit ist innerhalb des topfförmigen Hinterteiles 8 des Gehäuses 4 der Maschine zwischen dem hinteren Lüfter 32 und dem hinteren Lager 16 montiert. Die Baueinheit 44 ist an der Stirnwand 46 des Gehäuses 4 durch Schrauben 48 und 136 montiert, wobei die Schrauben 48 einen Kühlkörper 104 mit dem Gehäuse direkt verbinden und die Schrauben 136 einen Kühlkörper 102 mit dem Gehäuse elektrisch isoliert verbinden.

Figur 12 stellt eine typische Schaltung eines solchen Drehstromgenerators dar. Die Statorwicklung 20 enthält drei zu einem Stern geschaltete Wicklungsteile 50, 52 und 54, deren Ausgänge mit einem Dreiphasen-Gleichrichter aus sechs Dioden 56, 58, 60, 62, 64 und 66 verbunden sind. Die Schaltung enthält ferner zwei Sternpunktdioden 68 und 70, die einerseits an den Sternpunkt 72 der Statorwicklung 20 angeschlossen sind. Die Sternpunktdioden 68 und 70 bilden einen Extraausgang, indem sie bei ungleicher Phasenbelastung leiten, wenn der Sternpunkt 72 kein Null-Potential führt. Alle Dioden sind im Praxisfall für einen Strom bis zu 35 Ampere ausgelegt, so daß es üblich ist, sie in einem Kühlkörper zu montieren, um die in ihnen erzeugte Wärme abzuführen und diese Halbleiterelemente gegen Überhitzung zu schützen. Eine solche typische Diode ist in Figur 13 gezeigt. Sie hat einen Metallsockel 110, der in den Kühlkörper eingesetzt wird sowohl zur elektrischen Verbindung als auch zur Wärmeabführung. Die Diode hat ferner ein Isolierstoffgehäuse 112 in dem ein Anschlußleiter 114 befestigt ist, der die andere Verbindung der Diode darstellt.

Wegen der hohen Strombelastung der Dioden ist es erforderlich, die Luftkühlung der Gleichrichter-Baueinheit zu verbessern. In bekannten Ausführungen sind Öffnungen an der Stirnwand 46 des Gehäuses 4 vorgesehen, die es erlauben, einen Luftstrom in das Gehäuse entlang der Kühlkörper und der Trägerbaueinheit zum Lüfter 32 hin zu führen. Die Luft wird anschließend durch Öffnungen 73 im Hinterteil 8 des Gehäuses 2 nach außen abgeführt. Der vordere Lüfter fördert ebenfalls Kühlluft in das Gehäuse, wobei er hauptsächlich zur Kühlung der Statorwicklung 20 vorgesehen ist. In bekannten Drehstromgeneratoren sind im Luftstrom der Kühlluft im Bereich der Dioden Unwirksamkeiten vorhanden, die unter bestimmten Umständen dort zu einer Überhitzung führen können. Einige der Unwirksamkeiten von bekannten Einrichtungen werden hier näher erläutert. Ein Teil der Unwirksamkeit von bekannten Drehstromgeneratoren ist zurückzuführen auf die Gestaltung des Kühlkörpers und der Trägerbaueinheit. Die Figuren 3, 4 und 5 zeigen eine bekannte Form der mit Kühlkörpern versehenen Gleichrichterbaueinheit 74. Die Baueinheit enthält positive und negative Kühlkörper 76 und 78 sowie einen Leiter enthaltenden Tragkörper 80. Der Tragkörper 80 ist aus Kunststoffmaterial gespritzt, in dem die Leiter eingebettet sind, welche die Diodenanschlüsse und die Anschlüsse der Statorwicklung 20, der Erregerwicklung 24 und des Reglers 38 enthalten. Der Tragkörper 80 ist mechanisch mit den Kühlkörpern durch nicht dargestellte Nieten verbunden. Der Tragkörper 80 hat eine Anzahl von Vorsprüngen 75 (dargestellt in Figuren 8 bis 10), welche von dessen Rückwand abstehen und auf die die Kühlkörper montiert sind. Die Vorsprünge 75 enthalten Bohrungen, in welche die Schrauben 48 bzw. 136 zur Befestigung eingesetzt sind. Die Metallsockel 110 der Dioden 56, 58, 60 und 68 sind in entsprechende Bohrungen des positiven Kühlkörpers 76 eingepreßt; wobei die Metallsockel 110 der Dioden 62, 64, 66 und 70 in entsprechende Bohrungen des negativen Kühlkörpers 78 eingepreßt sind. Die Kühlkörper sind vorzugsweise aus einer Aluminiumplatte mit einer Dicke von etwa 3 mm geformt. Sie sind derart gebogen, daß sie einen ebenen Tragbereich 82 und 84 aufweisen sowie einen zylindrisch hochgebogenen Randbereich 86 und 88. Die Kühlkörper sind ferner mit Schlitzen 90 versehen, so daß der Biegevorgang erleichtert wird. Die zylindrischen Randbereiche 86 und 88 stehen in Axialrichtung bis zu einer Position vor, daß sie dem Rand des Tragkörpers 80 unmittelbar gegenüberliegen, wie aus Figur 5 erkennbar. Der Außenrand 92 des Tragkörpers 80 grenzt innen an dem zylindrischen Randbereich 86 und 88 der Kühlkörper an, wie in Figur 4 erkennbar. Wenn die bekannte Gleichrichter-Baueinheit 74 in einem Drehstromgenerator mit innenliegendem Lüfter montiert ist, ist es möglich, daß unter bestimmten Umständen eine Überhitzung der Dioden erfolgt, weil die Kühlung an den Kühlkörpern und Dioden relativ unwirksam ist. Allgemein gesprochen, wenn die Gleichrichter-Baueinheit 74 im Gehäuse 4 der Maschine montiert ist, haben die zylindrischen Randbereiche 86 und 88 der Kühlkörper 76 und 78 einen Abstand von der Innenwand 94 des Gehäusehinterteiles 8, so daß ein Luftstrom durch außenliegende Öffnungen in der Stirnwand 46 des Gehäuses axial angrenzend an der Innenwand 94 des Gehäuses einströmen kann, der damit einen vergleichsweise kleinen Kühleffekt an den Dioden aufweist. Ein anderes Merkmal, daß zu einer uneffektiven Kühlung führt, ist die zentrale Öffnung 96 der Gleichrichter-Baueinheit 74. Die Kühlluft kann dort axial durch den Spalt zwischen der Zentralöffnung 96 der Gleichrichter-Baueinheit 74 und den Schleifringen 40 udn 42 hindurchfließen und so nur einen kleinen Kühleffekt an den Kühlkörpern und Dioden bewirken.

Die vorstehend angeführten Nachteile werden subtantiell mit den Maßnahmen der vorliegenden Erfindung vermieden, wobei eine Anzahl von neuen Merkmalen die Baueinheit 44 und das Gehäuse umfassen, so daß die Kühlung der Dioden wesentlich verbessert werden konnte.

Eine wichtige Überlegung, die bei der Durchführung subtantieller Änderungen in der Gestaltung der Fertigung eines Drehstromgenerators zu beachten ist, sind die Werkzeugkosten. Sehr wesentliche Kosteneinsparungen können gemacht werden durch Verbesserungen, die nur leichte Änderungen am Kühlsystem erfordern. Im Hinblick auf die Baueinheit 44 der vorliegenden Erfindung kann es im Hinblick auf die bekannte Gleichrichter-Baueinheit 74 allgemein einfach sein, durch vergleichsweise kleine Änderungen überraschenderweise große und signifikante Verbesserungen in der Wirkung zu erzielen. Einfache Maßnahmen im Hinblick auf die Anpassung am Gehäuse der Maschine und am Träger des hinteren Lagers 16 werden nachfolgend beschrieben.

Die Gleichrichter-Baueinheit 44 nach der Erfindung gemäß Figur 6, 7, 8, 9 und 10 enthält einen mit Leitern versehenen Tragkörper 100 sowie einen positiven und einen negativen Kühlkörper 102 und 104. Der Tragkörper 100 ist an sich eine einfache Konstruktion gemäß dem Tragkörper 80 derart, daß er aus Kunststoffmaterial gespritzt ist und verschiedene Leiter enthält, die die Verbindungen zwischen den Dioden herstellen. Der äußere Rand 106 ist gemäß Figur 10 mit einer angeformten Lippe 107 versehen, die an der Innenseite der Gehäusewand 94 (Figur 1) anliegt. Dies bedeutet eine signifikante Verbesserung des Kühleffektes durch die Luftzirkulation des hinteren Lüfters, die ein Ausströmen der Kühlluft vorbei an der Gleichrichter-Baueinheit 44 axial entlang der Innenwand 94 des Gehäuses verhindert, wie dies im Falle der Gleichrichter-Baueinheit 74 der bekannten Äusführung der Fall ist. Tests wurden an einem Prototyp mit diesem Merkmal ausgeführt und dabei wurde festgestellt, daß diese Äusführung zu einer Verringerung der Diodentemperatur bis zu 20°C im Vergleich zur bisherigen Ausführung führt.

Der Tragkörper 100 hat eine zentrale Öffnung 108, durch die die Welle und die Schleifringe 34 und 36 hindurchgeführt sind, wie Figur 1 zeigt. Die Kühlkörper 102 und 104 sind vorzugsweise aus Aluminiumblech in einer Dicke von eta 3 mm hergestellt. Die Bleche haben Bohrungen, in welche die verschiedenen Dioden eingepreßt sind, so wie bei der bekannten Ausführung. Bei der Gleichrichter-Baueinheit 44 nach der vorliegenden Erfindung sind die Dioden derart montiert, daß ihr Metallsockel 110 jeweils in die Kühlplatten 102 und 104 eingepreßt ist und ihr Gehäuse 112 mit dem Anschlußleiter 114 in dem Spalt zwischen den Kühlkörpern und dem Tragkörper 100 liegt. Die Anschlußleiter 114 der Dioden ragen dabei durch Öffnungen 116, wo sie auf der Vorderseite des Tragkörpers 100 vorstehen, wie Figur 9 zeigt. Dies erlaubt das Verlöten der Anschlußleiter 114 mit den Leitern (nicht dargestellt), die im Tragkörper 100 eingebettet sind und welche die Verbindung zu der Ständerwicklung darstellen. Gemäß Figur 7 sind die Öffnungen 116 relativ groß und in der Form für die Anschlüsse praktikabel gestaltet, wobei jedoch die mechanische Festigkeit des Tragkörpers 100 gewährleistet ist. Im Hinblick darauf haben die Öffnungen 116 vorzugsweise eine Fläche von mindestens 50 mm². Im Gegensatz dazu hat der bekannte Tragkörper 80 runde Öffnungen 118 mit einem Durchmesser von typischerweise etwa 5 mm. Somit ist die Querschnittsfläche der Öffnungen 116 viel größer, so daß entsprechend mehr Luft durch diese Öffnungen strömen kann. Es wurde festgestellt, daß die größeren Luftströme, die dadurch entlang der Anschlußleiter 114 fließen können, zu einem signifikanten Kühleffekt an den Dioden beitragen. Bei einem geprüften Prototyp mit diesem Merkmal wurde festgestellt, daß die Temperaturreduktion an der Diode bis zu 8° C beträgt. Es sei hervorgehoben, daß die Form, welche zur Herstellung des Tragkörpers verwendet wird, in einfacher Weise zu modifizieren ist, so daß damit ein Tragkörper 100 gemäß der Erfindung herzustellen ist. Diese offensichtlich kleinen Herstelländerungen bewirken jedoch einen signifikanten Effekt bei der Kühlung der Dioden des Drehstromgenerators.

Figur 9 stellt eine weitere Änderung an dem Tragkörper 100 dar, welche zur effektiveren Kühlung der Dioden beiträgt. Der Tragkörper 100 ist dort mit einer runden Ausformung 119 versehen, die am äußeren Rand 106 des Tragkörpers 100 nach innen angeformt ist. Die Ausformung 119 hat den Effekt, eine Turbulenz in dem dort vorbeigeführten Luftstrom zu erzeugen. Ausführlicher zeigt das Figur 1, wo der Luftstrom -dargestellt durch Pfeile 122- durch die Öffnungen 120 in der Stirnwand 46 des Gehäuses 4 eintritt und mit seiner Umlenkung radial nach außen zu den äußeren Rändern der Kühlkörper 102 und 104 fließt. Die Anlage der Lippe 107 an der Innenwand 94 des Gehäuses 4 bewirkt eine Umlenkung des Luftstromes radial nach innen vorbei an den verschiedenen Dioden. Die Ausbildung der Ausformung 119 gibt hier den Luftstrom zum Teil eine Turbulenz, wie herausgefunden wurde, welche den Wärmetransport von den Kühlkörpern und Dioden zur Kühlluft steigert. Bei einem getesteten Prototyp wurde gefunden, daß dieses Merkmal mit bis zu 6° C zur Reduktion der Betriebstemperatur der Dioden beiträgt.

In bekannten Drehstromgeneratoren ist die Wirkung der Kühlluft auch dadurch reduziert, daß Teile des Kühlluftstroms durch den Spalt zwischen den Schleifringen und der Welle einerseits und der Innenperipherie der Öffnung 96 der Gleichrichter-Baueinheit 74 nach Figur 3, 4 und 5 andererseits mehr oder weniger direkt zum hinteren Lüfter 32 gelangen. Dies ist selbstverständlich unerwünscht, weil es den Kühleffekt der Luft an den Dioden reduziert. Eine geringe Modifikation an einem der Komponenten der Maschine genügt jedoch, um dieses Problem effektiv zu lösen. An einem typischen Drehstromgenerator nach Figur 1 ist das hintere Lager 16 in einem Lagertopf 124 des Gehäusehinterteils 8 mittels einer Lagerpasshülse 126 aufgenommen, die aus Kunststoff hergestellt ist. Gemäß Figur 11 ist der Randabschnitt 128 der Passhülse 126 etwas länger ausgeführt, so daß er am Innenumfang an den Kühlkörpern 102 und 104 anliegt, was in Figur 1 und 10 dargestellt ist. Diese Anlage mit der verlängerten Passhülse 126 blockiert effektiv ein Durchfließen der Kühlluft axial entlang der Welle und bewirkt, daß subtantiell die ganze in das Gehäuse einströmende Luft zu den Kühlkörpern 102 und 104 gelangt und an ihnen radial nach außen entlangströmt. Die Passhülse 126 ist ferner mit einem Schlitz 130 versehen, der die Kohlebürsten 40 mit dem Bürstenhalter 43 aufnimmt. An einem Prototyp mit dieser Ausführung wurde getestet und herausgefunden, daß die Arbeitstemperatur der Dioden dadurch zum etwa 20° C reduziert werden kann.

Ferner wurde gefunden, daß die Anordnung der Öffnungen 120 in der Stirnwand 46 des Gehäuses ebenfalls einen signifikanten Effekt für die Kühlung der Dioden haben können. Insbesondere wurde gefunden, daß bei einer ausgewählten Anordnung der Öffnungen 120 derart, daß sie im unmittelbaren Bereich der verschiedenen Dioden liegen, ein besserer Kühleffekt zu erhalten ist. Figur 2 stellt eine bevorzugte Anordnung in Übereinstimmung mit der Erfindung dar, wobei, allgemein gesprochen, ein paar der Öffnungen 120 jeweils benachbart zu einer der Dioden vorgesehen sind. Mit dieser Anordnung hat die dem Gehäuse zugeführte Rühlluft mehr direkten Kontakt mit dem Metallsockel 110 der verschiedenen Dioden und bewirkt somit eine bessere Kühlung dieser Elemente.

Ferner wurde gefunden, daß es möglich ist, eine effektivere Kühlung am positiven Kühlkörper 102 vorzusehen, wobei die Wärmeleitung zwischen dem Kühlkörper 102 und dem Gehäuse 4 um einige Grade zu verbessern ist. Dies ist erzielbar durch Verwendung relativ dünner Unterlegscheiben 134 aus Glimmer zwischen den zwei Schrauben 136, welche den positiven Kühlkörper 102 der Baueinheit 44 und die Stirnwand 46 des Gehäuses miteinander verbinden. Dabei ist davon auszugehen, daß es natürlich erforderlich ist, eine elektrische Isolation zwischen dem positiven Kühlkörper 102 und dem Gehäuse 4 zu erhalten. Die Schrauben 136 sind daher durch Isolierhülsen im Kühlkörper 102 hindurchgeführt, die in der Zeichnung nicht dargestellt sind. Es wurde in Übereinstimmung mit der Erfindung gefunden, daß ein wirksamer Kühleffekt durch eine Wärmeleitung zum Gehäuse 4 zu erreichen ist, wenn Unterlegscheiben aus Glimmer verwendet werden, deren Dicke zwischen 0,1 mm bis 0,25 mm liegen.

Ein Prototyp mit all den verschiedenen vorerwähnten Verbesserungen wurde getestet und dabei wurde gefunden, daß unter verschiedenen Betriebsbedingungen die Diodentemperatur von 180° C bis auf 118° C abfällt. Es sei erwähnt, daß diese Temperatur von etwa 180° C beim bekannten Stand der Technik sehr dicht an bzw. über die Betriebstemperatur von Halbleiterdioden liegt.

Es sei auch im Hinblick auf das zuvor Ausgeführte erwähnt, daß die elektrische Maschine nach der vorliegenden Erfindung eine signifikante Anzahl von Änderungen enthält, welche zur Verbesserung der Vorrichtung beitragen, die jedoch nicht eine subtantielle Änderung in der Ausstattung der Vorrichtung und in den Einrichtungen für deren Produktion erfordern. Die Resultate sind dabei geringe Herstellungskosten des Drehstromgenerators mit hohen Leistungsmerkmalen und verbesserter Zuverlässigkeit durch die niederen Temperaturen an den Dioden.

Modifikationen sind offensichtlich im Rahmen des Fachkönnens möglich, ohne den Gedanken und den Bereich der vorliegenden Erfindung zu verlassen.

## Patentansprüche

1. Elektrische Maschine, vorzugsweise Drehstromgenerator (2) mit einem Gehäuse (4), einem im Gehäuse drehbar gelagerten Rotor (13), mindestens einem mit dem Rotor im Gehäuse drehbar angeordneten Lüfter (32), mit Schaltungselementen (56, 58, 60, 62, 64, 66) einer Gleichrichter-Baueinheit (44), die auf mindestens einem Kühlkörper (102, 104) im Gehäuse montiert sind, die durch Luftströme (122) des Lüfters gekühlt werden, welche durch Öffnungen (120) in der hinteren Stirnwand des Gehäuses eintreten, wobei die Luftströme nach dem Eintritt in das Gehäuse (4) zunächst in einer ersten, im wesentlichen radial verlaufenden Richtung angrenzend an der Außenseite des Kühlkörpers (102, 104) entlangführen, dann axial verlaufen und anschließend in einer zweiten, im wesentlichen radial verlaufenden Richtung angrenzend an der Innenseite des Kühlkörpers (102, 104) entlangführen, dadurch gekennzeichnet, daß der mindestens eine Kühlkörper (102, 104) auf einem Tragkörper (100) der Gleichrichter-Baueinheit (44) befestigt ist, welcher derart mit Abstand hinter dem Kühlkörper (102, 104) angeordnet ist und mit seinem äußeren Rand (106) an der Innenwand (94) des Gehäuses (4) angrenzt, daß der Kühlluftstrom (122) nach dem Gehäuseeintritt zunächst am Kühlkörper (102, 104) radial nach außen, dann axial zwischen der Innenwand (94) des Gehäuses (4) und dem äußeren Rand des Kühlkörpers (102, 104) und anschließend von dem Tragkörper (100) umgelenkt zwischen diesem und dem Kühlkörper (102, 104) radial nach innen verläuft, um schließlich über mindestens eine Öffnung (108, 116) des Tragkörpers (100) zu dem dahinter liegenden Lüfter (32) zu gelangen.

2. Elektrische Maschine nach Anspruch 1, dadurch gekennzeichnet, daß der äußere Rand (106) des Tragkörpers (100) mit einer Dichtlippe (107) versehen ist, welche die Gleichrichter-Baueinheit (44) gegen die Innenwand (94) des Gehäuses (4) abdichtet.

3. Elektrische Maschine nach Anspruch 2, dadurch gekennzeichnet, daß der Tragkörper (100) mit einer zu dem Kühlkörper (102, 104) hin gerichteten runden Ausformung (119) versehen ist um im Kühlluftstrom (122) Turbulenzen zu erzeugen.

4. Elektrische Maschine nach Anspruch 3, dadurch gekennzeichnet, daß die Ausformung (119) am äußeren Rand (106) des Tragkörpers (100) in Form einer ringförmig umlaufenden Mulde angeordnet ist.

5. Elektrische Maschine nach einem der vorherigen Ansprüche, dadurch gekennzeichnet, daß zwischen dem inneren Rand des Kühlkörpers (102, 104) und der hinteren Stirnwand (46) des Gehäuses (2) mindestens eine Barriere (128) für eine Verhinderung eines axialen Luftstromes am Innenrand des Kühlkörpers (102, 104) vorgesehen ist.

6. Elektrische Maschine nach Anspruch 5, dadurch gekennzeichnet, daß die Barriere aus dem vorderen, am Innenumfang des Kühlkörpers (102, 104) anliegenden Teil (128) einer Passbuchse (126) besteht, in die das hintere Lager (16) der Maschine eingesetzt ist.

7. Elektrische Maschine nach einem der vorherigen Ansprüche, dadurch gekennzeichnet, daß der Kühlkörper (102, 104) mit einem Abstand hinter der Stirnwand (46) des Gehäuses (2) montiert ist, welche zum Einströmen von Kühlluft im Bereich der im Kühlkörper (102, 104) eingesetzten Schaltungselemente (56, 58, 60, 62, 64, 66, 68, 70) der Gleichrichter-Baueinheit (44) Öffnungen (120) aufweist, so daß die durch die Öffnungen (120) einströmende Luft direkt auf die Schaltungselemente (56 bis 70) auftrifft.

8. Elektrische Maschine nach einem der vorherigen Ansprüche, dadurch gekennzeichnet, daß die Anschlußleitung (114) der Schaltungselemente (56 bis 70) durch weite Öffnungen (116) im Tragkörper (100) hindurchragen, durch welche Kühlluft entlang den Anschlußleitern (114) zum Lüfter (32) geführt ist.

9. Elektrische Maschine nach Anspruch 8, dadurch gekennzeichnet, daß die Öffnungen (116) im Tragkörper (100) mindestens 50 mm² groß sind.

10. Elektrische Maschine nach einem der vorherigen Ansprüche, dadurch gekennzeichnet, daß die Gleichrichter-Baueinheit (44) an der hinteren Stirnwand (46) des Maschinengehäuses (2) montiert ist, wobei zwei die Schaltungselemente (58 bis 70) tragende Kühlkörper (102, 104) zur Stirnwand (46) hin angeordnet und durch Schrauben (48, 136) daran festgeschraubt sind, von denen ein Kühlkörper (102) über Unterlegscheiben (134) aus Isolierstoff am Gehäuse (2) wärmeleitend und elektrisch isoliert befestigt ist.

## Claims

1. Electric machine, preferably a three-phase generator, (2) having a housing (4), a rotor (13) mounted rotatably in the housing, at least one fan (32) arranged rotatably with the rotor in the housing, having circuit elements (56, 58, 60, 62, 64, 66) of a rectifier unit (44) which are mounted on at least one heat sink (102, 104) in the housing and are cooled by air flows (122) of the fan which enter through openings (120) in the rear end wall of the housing, it being the case that after entering the housing (4) the air flows are firstly guided along bordering on the outside of the heat sink (102, 104) in a first direction running essentially radially, then they run axially and are subsequently guided along bordering on the inside of the heat sink (102, 104) in a second direction running essentially radially, characterized in that the at least one heat sink (102, 104) is fastened to a support member (100) of the rectifier unit (44), which support member is arranged at a distance behind the heat sink (102, 104) and borders with its outer rim (106) on the inner wall (94) of the housing (4) in such a way that after entering the housing the cooling air flow (122) firstly runs radially outwards on the heat sink (102, 104), then axially between the inner wall (94) of the housing (4) and the outer rim of the heat sink (102, 104) and subsequently, deflected by the support member (100), radially inwards between the latter and the heat sink (102, 104), in order finally to reach, via at least one opening (108, 116) in the support member (100), the fan (32) situated therebehind.

2. Electric machine according to Claim 1, characterized in that the outer rim (106) of the support member (100) is provided with a sealing lip (107) which seals the rectifier unit (44) with respect to the inner wall (94) of the housing (4).

3. Electric machine according to Claim 2, characterized in that the support member (100) is provided with a round shaping (119), which is directed towards the heat sink (102, 104), to generate turbulence in the cooling air flow (122).

4. Electric machine according to Claim 3, characterized in that the shaping (119) is arranged on the outer rim (106) of the support member (100) in the form of a trough which runs around in an annular manner.

5. Electric machine according to one of the preceding claims, characterized in that at least one barrier (128) is provided between the inner rim of the heat sink (102, 104) and the rear end wall (46) of the housing (2) for the purpose of preventing an axial air flow at the inner rim of the heat sink (102, 104).

6. Electric machine according to Claim 5, characterized in that the barrier consists of the front part (128), bearing on the inner circumference of the heat sink (102, 104), of a fitted bush (126) into which the rear bearing (16) of the machine is inserted.

7. Electric machine according to one of the preceding claims, characterized in that the heat sink (102, 104) is mounted at a distance behind the end wall (46) of the housing (2), which end wall has openings (120) for cooling air to flow in in the region of the circuit elements (56, 58, 60, 62, 64, 66, 68, 70), inserted in the heat sink (102, 104), of the rectifier unit (44), so that the air flowing in through the openings (120) impinges directly on the circuit elements (56 to 70).

8. Electric machine according to one of the preceding claims, characterized in that the connecting conductors (114) of the circuit elements (56 to 70) reach through wide openings (116) in the support member (100), through which openings cooling air is guided along the connecting conductors (114) to the fan (32).

9. Electric machine according to Claim 8, characterized in that the openings (116) in the support member (100) have a size of at least 50 mm².

10. Electric machine according to one of the preceding claims, characterized in that the rectifier unit (44) is mounted on the rear end wall (46) of the machine housing (2), two heat sinks (102, 104) carrying the circuit elements (58 to 70), being arranged facing the end wall (46) and being firmly screwed thereto by means of screws (48, 136), of which one heat sink (102) is fastened to the housing (2) in a thermally conductive and electrically insulating manner by means of washers (134) of insulating material.

## Revendications

1. Machine électrique, de préférence alternateur (2) comportant un boîtier (4) avec un rotor (13) monté à rotation dans le boîtier, au moins un ventilateur (32) monté avec le rotor en rotation dans le boîtier, les éléments de commutation (56, 58, 60, 62, 64, 66) d'un ensemble redresseur (44) montés sur au moins un corps de radiateur (102, 104) dans le boîtier, refroidis par la veine d'air (122) du ventilateur arrivant par des ouvertures (120) de la paroi arrière du boîtier, les veines d'air, après pénétration dans le boîtier (4), étant tout d'abord guidées suivant une première direction essentiellement radiale, de manière adjacente à la face extérieure du corps de radiateur (102, 104) puis circulant axialement puis être guidées dans une seconde direction essentiellement radiale, adjacente à la face intérieure du corps de radiateur (102, 104), caractérisée en ce qu'au moins un corps de radiateur (102, 104) est fixé sur un corps de support (100) de l'ensemble redresseur (44) en étant monté à une distance telle derrière le corps de radiateur (102, 104) et avec son bord extérieur (106) de manière adjacente à la paroi intérieure (94) du boîtier (4) pour que le courant d'air de refroidissement (122), après l'entrée dans le boîtier, circule tout d'abord sur le corps de radiateur (102, 104), radialement vers l'extérieur puis axialement entre la paroi intérieure (94) du boîtier (4) et le bord extérieur du corps de radiateur (102, 104) puis est dévié par le corps de support (100) entre celui-ci et le corps de radiateur (102, 104), radialement vers l'intérieur pour finalement arriver par au moins une ouverture (108, 116) du corps de support (102, 104) dans le ventilateur (32) qui se trouve derrière.

2. Machine électrique selon la revendication 1, caractérisée en ce que le bord extérieur (106) du corps de support (100) est muni d'une lèvre d'étanchéité (107) qui assure l'étanchéité entre l'ensemble redresseur (44) et la paroi intérieure (94) du boîtier (4).

3. Machine électrique selon la revendication 2, caractérisée en ce que le corps de support (100) est muni d'une déformation (119), ronde, dirigée vers le corps de radiateur (102, 104) pour créer des turbulences dans la veine d'air de refroidissement (122).

4. Machine électrique selon la revendication 3, caractérisée en ce que la déformation (119) du bord extérieur (106) du corps de support (100) est sous la forme d'une goulotte annulaire périphérique.

5. Machine électrique selon l'une des revendications précédentes, caractérisée en ce qu'entre le bord intérieur du corps de radiateur (102, 104) et la paroi arrière (46) du boîtier (2) il y a au moins une barrière (128) pour éviter un courant d'air axial le long du bord intérieur du corps de radiateur (102, 104).

6. Machine électrique selon la revendication 5, caractérisée en ce que la barrière se compose d'une douille ajustée (126), avant, appliquée contre la périphérie intérieure du corps de radiateur (102, 104) par une partie (128) et cette douille reçoit le palier arrière (16) de la machine.

7. Machine électrique selon l'une des revendications précédentes, caractérisée en ce que le corps de radiateur (102, 104) est monté à une certaine distance derrière la paroi frontale (46) du boîtier (2) qui comporte pour l'entrée d'air de refroidissement au niveau des éléments de circuit (56, 58, 60, 62, 64, 66, 68, 70) placés dans le corps de radiateur (102, 104) de l'ensemble redresseur (44), des ouvertures (120) pour que l'air qui pénètre par les ouvertures (120) arrive directement sur les éléments de commutation (56-70).

8. Machine électrique selon l'une des revendications précédentes, caractérisée en ce que les conducteurs de branchement (144) des éléments de circuit (56-70) traversent des ouvertures larges (116) du corps de support (100) à travers lesquelles l'air de refroidissement est guidé le long des conducteurs de branchement (114) vers le ventilateur (32).

9. Machine électrique selon la revendication 8, caractérisée en ce que les ouvertures (116) du corps de support (100) ont une dimension d'au moins 50 mm².

10. Machine électrique selon l'une des revendications précédentes, caractérisée en ce que l'ensemble redresseur (44) est monté sur la paroi arrière (46) du boîtier (2) de la machine, deux radiateurs (102, 104) portant les éléments de circuit (58-70) étant placés du côté de la paroi (46) en y étant fixés par des vis (48, 136) et l'un des corps de radiateur (102) est fixé avec interposition de rondelle (134) en matière isolante sur le boîtier (2), avec isolation électrique et thermique.
